# EUROPÄISCHE PATENTANMELDUNG

(11) **EP 1 160 491 A1**
(43) Veröffentlichungstag der Anmeldung: **05.12.2001**
(21) Anmeldenummer: 01102062.5
(22) Anmeldetag: 30.01.2001
(51) Int. Cl.: F16J 15/28

(54) **Stopfbuchse für Grossdieselmotoren**

(30) Priorität: 16.05.2000 DE 10023846
(71) Anmelder: Federal-Mogul Friedberg GmbH, 86316 Friedberg (DE)
(72) Erfinder: Cantow, Franz Günther, Dipl.-Ing., 42499 Hückeswagen (DE); Müschenborn, Horst, Dipl.-Ing, 87700 Memmingen (DE)
(74) Vertreter: Becker Kurig Straus

(57) **Zusammenfassung**

Offenbart wird eine Stopfbuchse zur Abdichtung einer Kolbenstange in Großdieselmotoren, aufweisend eine Mehrzahl von axial übereinander angeordneten metallischen Ringen (8), die auf ihrer Innenumfangsfläche jeweils mindestens einen Laufsteg (15, 15') aufweisen, wobei die Laufstege mit einer radialen Kraft in Richtung der Kolbenstange gespannt sind und die Ringe jeweils mindestens zwei Segmente aufweisen und durch eine an ihrer Außenumfangsfläche angeordnete Feder dichtend auf die Kolbenstange gedrückt werde, wobei die Ringe aus Gusseisen hergestellt sind und die Laufstege der Ringe eine harte verschleißbeständige Beschichtung aufweisen.

## Beschreibung

Die vorliegende Erfindung betrifft eine Stopfbuchse zur Abdichtung einer Kolbenstange in Großdieselmotoren gemäß dem Oberbegriff des Anspruchs 1.

Derartige Stopfbuchsen sind im Stand der Technik bereits bekannt. Sie kommen in Großdieselmotoren insbesondere von Schiffen zur Anwendung. Derartige Motoren haben eine Höhe von ca. 25 m.

Bei den Motoren handelt es sich insbesondere um Zwei-Takt-Kreuzkopfmotoren. Die Stopfbuchse ist auf der Kolbenstange zwischen Motor und Kurbelgehäuse angeordnet und verhindert das Eindringen von aus dem Motorraum stammender Aufladeluft und Schmutz in das Kurbelgehäuse. Es sind bereits für diesen Einsatzbereich Bronzedichtringe bekannt. Diese haben jedoch den Nachteil, daß sie sehr steif und unflexibel sind. Darüber hinaus lagern sich in den Bronzeelementen nach längerer Laufzeit der Motoren Fremdstoffe ein, die die Oberfläche der Kolbenstange beschädigen. Aus der GB 721,771 ist bereits ein Kolbenring bekannt, der auch als Stopfbuchse verwendet werden kann. Aufbau und Geometrie unterscheiden sich jedoch von den hier einschlägigen Stopfbuchsen-Ringen.

Da der Ausbau der Kolbenstange mit einer Stillstandzeit des Motors und mit hohen Kosten verbunden ist, wurde ein System gesucht, das bezüglich der Abdichtung und der Verhinderung des Verschleißes verbessert ist.

Aufgabe der vorliegenden Erfindung ist es daher, die gattungsgemäße Stopfbuchse derart weiter zu entwickeln, daß eine wirksame und wartungsfreie Abdichtung bei guten Dichteigenschaften unter hohem Dichtdruck erzielt wird.

Diese Aufgabe wird erfindungsgemäß durch den Gegenstand des Anspruchs 1 gelöst.

Gemäß einem Aspekt der Erfindung wird jeder Ring der mehrteiligen Anordnung aus mindestens zwei Segmenten gebildet, an deren Außenumfangsfläche eine Feder angeordnet ist, die die Laufstege bzw. Lippen der Ringsegmente dichtend auf die Kolbenstange drückt. Dadurch wird eine gute Abdichtwirkung bei konstruktiv einfachem Aufwand erzielt.

Die Ringe sind erfindungsgemäß aus Gußeisen hergestellt. Dadurch sind sie sehr beständig und verschleißfest.

Die Laufstege sind erfindungsgemäß mit einer verschleißfesten, harten Beschichtung versehen, die vorzugsweise Chrom aufweist bzw. aus Chrom besteht. Dadurch wird eine besondere Abriebfestigkeit erzielt.

Die Segmente sind bevorzugt halbringförmig, wodurch zwei Segmente pro Ring benötigt werden bzw. vorgesehen sind.

Die Beschichtung ist bevorzugt aufgalvanisiert, was die Herstellung erleichtert.

Der Durchmesser der Ringe ist bevorzugt größer als 150 mm.

Die Beschichtung der Ringe an ihren Stirnflächen ihrer Laufstege ist bevorzugt zwischen 0,1 - 0,4 mm stark. Besonders bevorzugt hat die Beschichtung eine Dicke von mindestens 0,15 mm und höchstens 0,35 mm.

Die Laufsteg haben bevorzugt eine axiale Abmessung an ihrer Stirnfläche von 1 - 2,5 mm, besonders bevorzugt eine axiale Abmessung zwischen 1,3 - 1,8 mm.

Benachbarte Laufstege eines Rings haben bevorzugt einen axialen Abstand von 6 - 10 mm, besonders bevorzugt 7 - 9,5 mm.

Die Ringe haben bevorzugt an ihrer Außenumfangsfläche eine Nut zur Aufnahme der Feder.

Diese Anordnung erhöht den radialen Raumbedarf der Stopfbuchse kaum.

Die Ringe weisen radiale, um den Umfang herum verteilte Öffnungen auf. Dadurch wird ein Lüftungseffekt erzielt.

Die Ringe weisen bevorzugt einen Abstreifring auf, der zwei im Abstand voneinander angeordnete Laufstege aufweist. Damit wird eine besonders gute Ölabstreifwirkung beobachtet.

Die Ringe weisen bevorzugt einen Dichtring auf, der einen Laufsteg aufweist. Damit werden gute Dichteigenschaften beobachtet.

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung.

Fig. 1 zeigt ein Ausführungsbeispiel einer Stopfbuchse gemäß der Erfindung mit einer Vielzahl von Ringen.

Fig. 2 zeigt einen Querschnitt durch einen Ring gemäß der Erfindung.

Fig. 3 zeigt einen Querschnitt durch einen anderen Ring gemäß der Erfindung.

Fig. 4 zeigt eine perspektivische Ansicht eines aus zwei Segmenten bestehenden Rings.

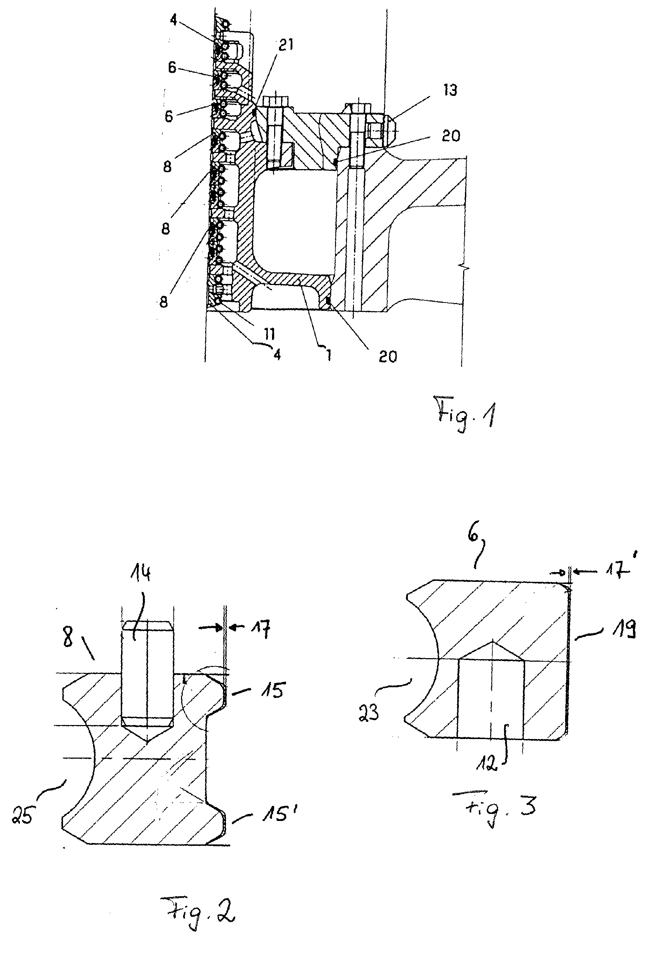

Fig. 1 zeigt einen Querschnitt durch eine Ausführungsform einer Stopfbuchse gemäß der Erfindung, bei der in einem Gehäuse 1 mehrere Ringe übereinander angeordnet und integriert sind. Hierbei handelt es sich um einen Abstreifring 4, Dichtringe 6 und Ölabstreifringe 8. Die Anordnung wird an ihren axialen Enden durch zwei Abstreifringe 4 abgeschlossen. Dazwischen finden sich zwei Dichtringe 6 und drei Ölabstreifringe 8 unterschiedlicher axialer Ausdehnung. Das Gehäuse 1 besitzt mehrere radial vorspringende Stege, zwischen denen die Ringe fixiert sind. Zur Abdichtung gegenüber außen liegenden Teilen besitzt das Gehäuse zwei einander gegenüberliegende O-Ringe 20 und in Höhe des Dichtrings 6 einen O-Ring 21, der eine geeignete Abdichtung zu dem sich radial nach außen anschließenden Zapfenteil 13 bildet.

Eine Ausführungsform eines Ölabstreifrings 8 ist im Querschnitt in Fig. 2 dargestellt. Der Ölabstreifring 8 ist durch einen axial eingreifenden Zapfen 14 mit dem Gehäuse 1 verbunden. An seiner der Kolbenstange zugewandten Dichtfläche sind zwei im Abstand voneinander angeordnete Laufstege bzw. Lippen 15, 15' gebildet, die jeweils mit einer Chromschicht 17 versehen sind. Die Chromschicht 17 hat eine Stärke von mindestens 0,15 mm und erstreckt sich insbesondere auf der axialen Stirnfläche des Laufstegs, wobei Chromreste in den benachbarten Flanken bzw. in dem planaren Mittelteil (zwischen den Laufstegen) möglich und zulässig sind. Grundsätzlich ist auch eine Schichtdicke von 0,3 - 0,35 mm möglich bzw. Schichtdicken im Bereich von 0,15 - 0,35 mm. Die mittleren axialen Stirnflächen der Laufstege 15, 15' haben eine axiale Abmessung von etwa 1,2 - 1,8 mm, bevorzugt 1,5 ± 0,1 mm. Der axiale Abstand zwischen den Laufstegmitten beträgt zwischen 9 - 11 mm, bevorzugt zwischen 9,5 und 10,3 mm. Die Flankenstücke der Laufstege haben eine Anwinkelung von etwa 25 - 35° gegenüber einer radialen Ebene. Somit sind die beiden Laufstege 15, 15' im Abstand auf der Innenumfangsfläche des Ölabstreifrings 8 angeordnet.

An der der Innenumfangsfläche gegenüberliegenden Außenumfangsfläche des Ölabstreifrings 8 ist eine umlaufende Nut 25 gebildet, die zur Aufnahme der Zugfeder 11 bestimmt ist.

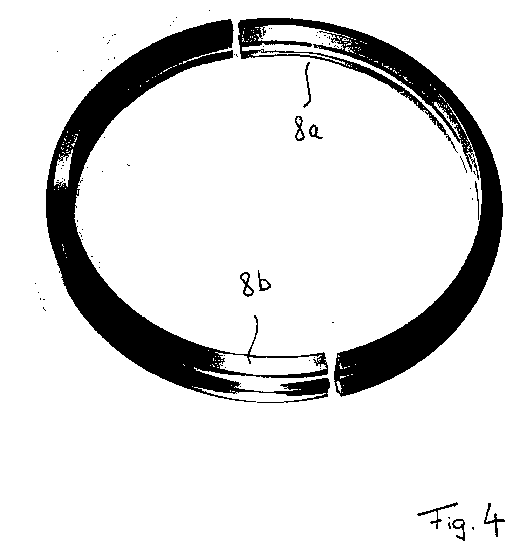

Die Fig. 3 zeigt eine Ausführungsform eines Dichtrings 6 im Querschnitt. Der Dichtring 6 ist durch einen axial eingreifenden Zapfen 12 mit dem Gehäuse 1 fixiert. An seiner Innenumfangsfläche ist ein Laufsteg 19 gebildet, der eine Chrombeschichtung 17' aufweist. Die Chromschicht hat eine Stärke von mindestens 0,13 mm, wobei Chromschichten bis 0,33 mm möglich sind. An ihrer der Innenumfangsfläche gegenüberliegenden Außenumfangsfläche ist eine umlaufende Nut 23 gebildet, die zur Aufnahme der Zugfeder 11 dient. Durch die Nut wird die radiale Abmessung bzw. Baugröße der Stopfbuchse unwesentlich erhöht.

Fig. 4 zeigt eine perspektivische Ansicht des Ölabstreifrings 8, der aus zwei Segmenten 8a, 8b gebildet ist. Die beiden Segmente sind jeweils halbringförmig ausgebildet. Sie haben einen Durchmesser von 13 - 17 cm, bevorzugt 14 - 16 cm. Die beiden Segmente 8a, 8b sind aus Gußeisen gefertigt und weisen an ihrer Innenumfangsfläche die mit einer Chrombeschichtung verstärkten Laufstege 15, 5' auf.

Die erfindungsgemäßen Stopfbuchsen zeichnen sich durch die Herstellung der Ringe aus Gußeisen mit chrombeschichteten Lippen bzw. Laufstegen aus, was im Gegensatz zu dem herkömmlich verwendeten Bronzematerial besondere Vorteile bietet. Die hochelastischen Ringsegmenten weisen an ihren chrombeschichteten Lippen einen hohen Lippendruck auf, der die Abdichtwirkung deutlich erhöht gegenüber herkömmlichen Ausführungsformen. Die im Vergleich zum Stand der Technik dünn ausgebildeten Lippen ermöglichen eine hohe Lippenpressung.

## Patentansprüche

1. Stopfbuchse zur Abdichtung einer Kolbenstange in Großdieselmotoren, aufweisend eine Mehrzahl von axial übereinander angeordneten metallischen Ringen (4, 6, 8), die auf ihrer Innenumfangsfläche jeweils mindestens einen Laufsteg (15, 15', 19) aufweisen, wobei die Laufstege mit einer radialen Kraft in Richtung der Kolbenstange gespannt sind, **dadurch gekennzeichnet, daß** die Ringe (4, 6, 8) jeweils mindestens zwei Segmente (8a, 8b) aufweisen und durch eine an ihrer Außenumfangsfläche angeordnete Feder (11) dichtend auf die Kolbenstange gedrückt werden, daß die Ringe aus Gußeisen hergestellt sind, und daß die Laufstege (15, 15', 19) zumindest an ihrer Stirnfläche mit einer verschleißfesten, harten Beschichtung (17, 17') versehen sind.

2. Stopfbuchse nach Anspruch 1, **dadurch gekennzeichnet, daß** die Segmente (8a, 8b) halbringförmig sind.

3. Stopfbuchse nach Anspruch 1 oder 2, **dadurch gekennzeichnet, daß** die Beschichtung (17, 17') Chrom aufweist.

4. Stopfbuchse nach Anspruch 1 oder 3, **dadurch gekennzeichnet, daß** die Beschichtung (17, 17') aufgalvanisiert ist.

5. Stopfbuchse nach einem der vorhergehenden Ansprüche, **dadurch gekennzeichnet, daß** der Durchmesser der Ringe (4, 6, 8) größer als 150 mm ist.

6. Stopfbuchse nach einem der vorhergehenden Ansprüche , **dadurch gekennzeichnet, daß** die Beschichtung (17, 17') zwischen 0,1 und 0,4 mm stark ist.

7. Stopfbuchse nach Anspruch 6, **dadurch gekennzeichnet, daß** die Beschichtung (17, 17') 0,15 - 0,35 mm stark ist.

8. Stopfbuchse nach einem der vorhergehenden Ansprüche, **dadurch gekennzeichnet, daß** die Laufstege (15, 15', 19) an ihrer Stirnfläche eine axiale Abmessung von 1 - 2,5 mm haben.

9. Stopfbuchse nach Anspruch 8, **dadurch gekennzeichnet, daß** die Laufstege an ihrer Stirnfläche eine axiale Abmessung von 1,3 - 1,8 mm haben.

10. Stopfbuchse nach einem der vorhergehenden Ansprüche, **dadurch gekennzeichnet, daß** benachbarte Laufstege (15, 15') eines Rings (8) einen axialen Abstand von 6 - 10, bevorzugt 7 - 9,5 mm haben.

11. Stopfbuchse nach einem der vorhergehenden Ansprüche, **dadurch gekennzeichnet, daß** die Ringe an ihrer Außenumfangsfläche eine Nut (23, 25) zur Aufnahme der Feder (11) aufweisen.

12. Stopfbuchse nach einem der vorhergehenden Ansprüche, **dadurch gekennzeichnet, daß** die Ringe (4, 6, 8) radial um den Umfang verteilte Öffnungen aufweisen.

13. Stopfbuchse nach einem der vorhergehenden Ansprüche, **dadurch gekennzeichnet, daß** die Ringe einen Abstreifring (8) aufweisen, der zwei im Abstand voneinander angeordnete Laufstege (15, 15') aufweist.

14. Stopfbuchse nach einem der vorhergehenden Ansprüche, **dadurch gekennzeichnet, daß** die Ringe einen Dichtring (6) aufweisen, der einen Laufsteg (19) aufweist.
